# EUROPEAN PATENT SPECIFICATION

(11) **EP 0 457 561 B1**
(45) Date of publication and mention of the grant of the patent: **21.02.1996**
(21) Application number: 91304347.7
(22) Date of filing: 15.05.1991
(51) Int. Cl.: B29C 49/26, B29C 47/02, B29C 53/48, B29C 69/00, B29C 49/48, B29C 49/04, B29L 23/22

(54) **Method and apparatus for making a laminated tubular body**
Verfahren und Vorrichtung zum Herstellen eines rohrförmigen laminierten Körpers
Procédé et appareil pour la fabrication d'un corps tubulaire laminé

(30) Priority: 17.05.1990 AU 194/90
(43) Date of publication of application: 21.11.1991
(73) Proprietor: IMPACT INTERNATIONAL PTY. LTD., Smithfield New South Wales 2164 (AU)
(72) Inventor: Lajovic, Dusan Sava, Smithfield New South Wales 2164 (AU)
(74) Representative: Smith, Norman Ian

(56) References cited:
- EP-A- 0 134 977
- EP-A- 0 231 637
- EP-A- 0 312 203
- US-A- 3 376 181
- PATENT ABSTRACTS OF JAPAN vol. 10, no. 265 (M-515)(2321) 10 September 1986 & JP-A-61 089 028 (MITSUBISHI PLASTICS IND LTD) 7 May 1986

## Description

The present invention relates to a method and an apparatus of making a laminated tubular body according to the preamble of claims 1 and 19.

The complete specification of Australian patent application number 21802/88 describes a method of manufacturing a laminated tubular body comprising the steps of drawing opposite longitudinal edges of a strip of sheet material into close proximity and then joining the corresponding longitudinal edges to form an outer tubular body. A hollow tubular lining member is simultaneously extruded from a die and expanded within the outer tubular body to form a substantially continuous lining in intimate contact with the inner surface of the outer body. The lining extends through apertures in the sheet material to form a plurality of sealed protuberances projecting outwardly beyond the outer surface of the composite tubular body.

It is important for the synergistic interrelationship between the lining member and the outer tubular body that these be adequately and uniformly bonded together to give the requisite integrity for the composite structure. Inadequate bonding between these layers can result in the lining breaking away from the outer body causing damage to the lining material and thereby enabling liquid contents of the tubular body to become contaminated or leak.

Previously, it was found that a separate gluing step was required in order to ensure that the extruded lining member was adequately bonded to the inner surface of the outer body. This in turn resulted in an increase in the complexity of the production process and a corresponding increase in the overall production costs.

It is therefore an object of the present invention to provide an improved method of making a laminated tubular body which overcomes or substantially ameliorates these disadvantages of the prior art.

Accordingly, the present invention provides a substantially continuous method of manufacture of a laminated tubular body, said method including the steps of drawing opposite longitudinal edges of a strip of sheet material into close proximity, joining said longitudinal edges to form an outer tubular body, extruding a hollow tubular lining member from an extrusion die within said outer tubular body, and thereafter heating the lining member and causing said lining member to expand to intimately contact an inner surface of said outer tubular body to form a substantially continuous lining of the outer tubular body, characterised in that said lining member is formed from a thermoplastic material and is heated to a temperature sufficient to form a thermoplastics weld bonding the lining to the inner surface of the outer tubular body on contact. Preferably, the lining member comprises a thin thermoplastic film. The lining member may be extruded from the die at a temperature of between approximately 50°C and 400°C. Preferably, the lining member is extruded from the die at a temperature of between approximately 100°C and 300°C, and in particular at around 200°C.

The sheet material forming the outer tubular body is preferably preheated with excess heat from the extrusion die.

Preferably also the corresponding longitudinal edges of the sheet material are joined downstream of the extrusion die to provide an observation window immediately adjacent the die through which the extrusion process is visible for continuous inspection.

The lining member is preferably expanded by means of differential fluid pressure (preferably air) in a laminating zone defined circumferentially by the outer tubular body, and longitudinally by an annular sizing ring and a pressure retaining ring disposed downstream of the sizing ring. In the case of larger containers, additional outwardly directed radial bonding pressure may be applied to the lining member within the laminating zone by mechanical pressure application means such as a pressure roller assembly, a spiral array of ball rollers, or a cylindrical array of staggered radially directed belts for example, to ensure adequate thermoplastic adhesion to the outer tubular body.

Preferably, heat is conveniently applied to the lining by conduction from hot air injected directly into the laminating zone through a centrally disposed mandrel to inflate the lining member. Alternatively, radiant heat from a separate heat source such as an electric induction heater disposed within or closely adjacent the laminating zone can be used. The temperature of the thermoplastics lining member is preferably raised to at least that of the preheated outer tubular body.

The method preferably includes the further step of forming at least one aperture in the outer tubular body through which the lining extends to form a sealed protuberance projecting outwardly beyond the outer surface of the tubular body. An array of such protuberances may be formed to provide a textured gripping surface.

The hollow lining member is preferably expanded so as to extend through one of the apertures and form a pouring spout defining a channel in fluid communication with the interior of the laminated tubular body. The formation of a spout in this way is particularly advantageous because it obviates the need for a separate spout forming process.

The invention also includes within its scope a method substantially as described above wherein the hollow lining member is extruded substantially continuously from the die, the respective opposite longitudinal edges of a plurality of said strips are drawn into close proximity, said respective opposite longitudinal edges are joined to form a plurality of outer tubular bodies, said outer tubular bodies are arranged in spaced apart relationship around the hollow lining member, and wherein said lining member is heated and expanded to form a substantially continuous lining in intimate contact with the inner surface of each said outer tubular body to form a series of spaced apart laminated tubular bodies joined by intermediate sections of said hollow lining member, said lining member being formed from thermoplastics material and being heated sufficiently to form a thermoplastic weld uniformly bonding the lining member to the outer tubular bodies.

According to a second aspect, the invention provides an apparatus for the substantially continuous manufacture of a laminated tubular body, said apparatus including guide means to draw opposite longitudinal edges of a strip of sheet material into close proximity, joining means to join said longitudinal edges to form an outer tubular body, an extrusion die to extrude a hollow tubular lining member, expansion means to expand the lining member within the outer tubular body so as to form a lining in intimate contact with an inner surface thereof, and characterized by providing heating means to heat said lining member to a temperature sufficient to form a thermoplastic weld bonding the lining to the inner surface of the outer tubular body.

Further details of the invention are defined in the features of the dependent claims.

Preferred embodiments of the invention will now be described, by way of example only, with reference to the accompanying drawings in which:
Figure 1 is a diagrammatic perspective view showing an apparatus for continuously forming a laminated tubular body in accordance with the method of the present invention;
Figure 2 is a diagrammatic perspective view showing an alternative embodiment of the apparatus of figure 1;
Figure 3 is a diagrammatic cutaway cross-sectional view illustrating the process of continuously forming a laminated tubular body, embodied in the apparatus of figures 1 and 2.
Figure 4 is a schematic cutaway cross-sectional view of a further embodiment of the apparatus illustrating an alternative route by which pressurized air is introduced into the laminating zone.

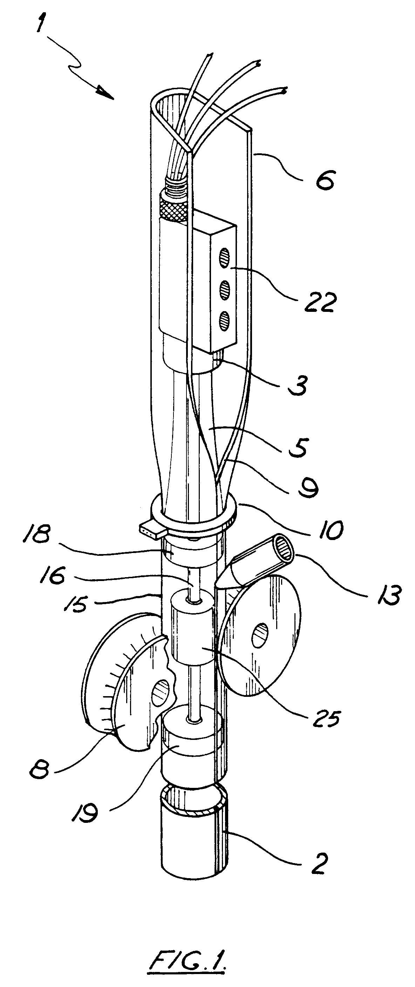

Referring to Figures 1 to 3 of the drawings, wherein corresponding features are denoted by corresponding reference numerals, the apparatus 1 for forming a hollow laminated tubular body 2 includes extrusion die 3 for continuously forming a hollow tubular lining member 5 from a suitable thermoplastics material.

Sheet material 6 such as cardboard, aluminium, or plastic is progressively drawn from a stock roll (not shown) by a drive mechanism in the form of caterpillar tracks 7, drive rollers 8 or other suitable means. The corresponding longitudinal edges 9 are progressively drawn into close proximity by means of annular forming ring 10 and subsequently joined by means of a suitable glue or thermoplastics bead from applicator nozzles 13 to form a continuous outer tubular body 15. The edges 9 may also be joined with adhesive tape or other suitable joining means. They may also be joined in butted or overlapped relationship by simple heat fusion with the lining. An internal mandrel 16 forms and stabilises the lining member 5 as it proceeds progressively downstream from extrusion die 3 as described in more detail below and provides convenient central access ducting for the various electrical, pneumatic, and control circuitry.

In this way, it will be appreciated that the extruded lining member 5 and the surrounding outer tubular body 15 are progressively and continuously formed in concentric relationship within the apparatus in a manner more fully described in the complete specification of Australian patent application number 21802/88, the contents of which is included herein by reference.

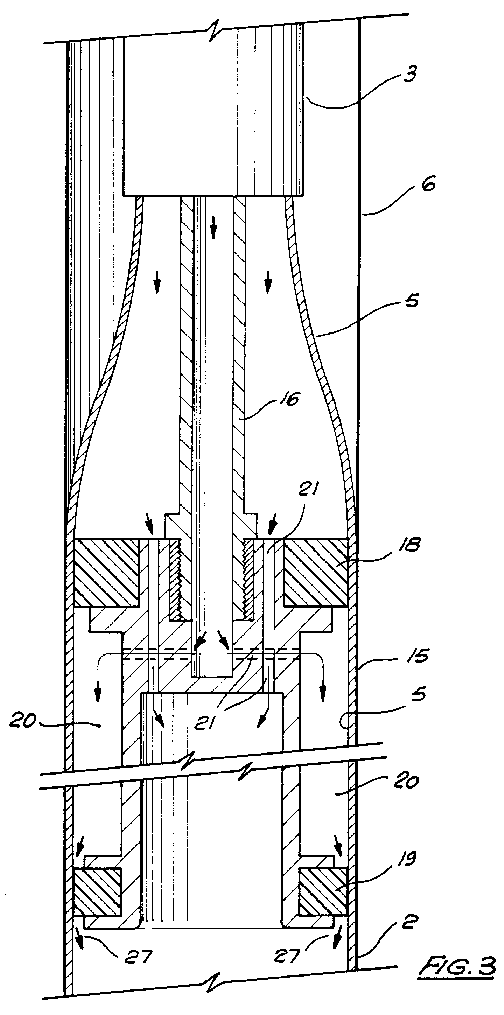

As best seen in figure 3, mandrel 16 includes an annular sizing ring 18 and axially spaced pressure retaining ring 19 disposed downstream of the sizing ring to stabilise the form of the lining member. The sizing ring 18 and pressure retaining ring 19 in conjunction with the outer tubular body 15 define an internal laminating zone 20. Mandrel 16 further includes air supply nozzles 21 to direct fluid, preferably air, under pressure into laminating zone 20 in order to inflate the tubular lining member against radial support pressure provided by the outer tubular body 15. The pressure retaining ring 19 maintains the inflation pressure in dynamic equilibrium within predetermined operating parameters whilst the steady flow of escaping air represented by arrows 27 conveniently acts as a pneumatic radial bearing to reduce frictional drag between the ring and the surrounding lining.

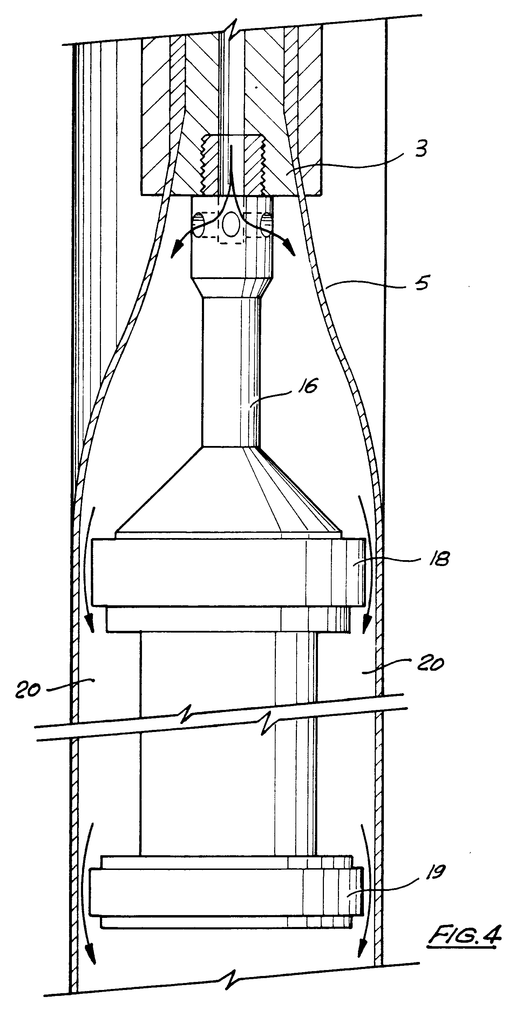

Referring now to Figure 4, a further embodiment of the apparatus is shown in which the pressurised fluid for inflation of the lining member 5 is introduced to the laminating zone 20 via the peripheral edges of the sizing ring 18, rather than through nozzles 21 in the mandrel 16 shown in Figure 3. Again this layer of air as a radial bearing minimising frictional drag between the sizing ring 18 and the lining.

In the past, it has been found that a separate adhesive layer must be applied intermediate the lining and the outer tubular body to ensure adequate bonding between the corresponding adjacent surfaces. According to the present invention, however, no such step is required. The thermoplastics lining material is initially extruded at a temperature of around 200°C which is achieved by means of a heating block 22 associated with the die. The lining member is then allowed to cool slightly in ambient air temperature to around 180°C with substantially ambient internal pressure thereby allowing the plastic to oxidise sufficiently to provide correct conditions for subsequent operations. It will be appreciated that excess heat and pressure must be avoided at this stage to prevent the relatively soft new-formed lining from bursting or distorting excessively before reaching the laminating zone. The sheet material 6, preferably cardboard, is also preheated at this point by means of heating block 22 and any excess heat from the extrusion die. If the outer body is plastic, a water-cooled jacket (not shown) can be incorporated to cool the heated block, either over its entire outer surface or in isolated sections as appropriate to ensure that the external surface temperature is controlled to within workable limits.

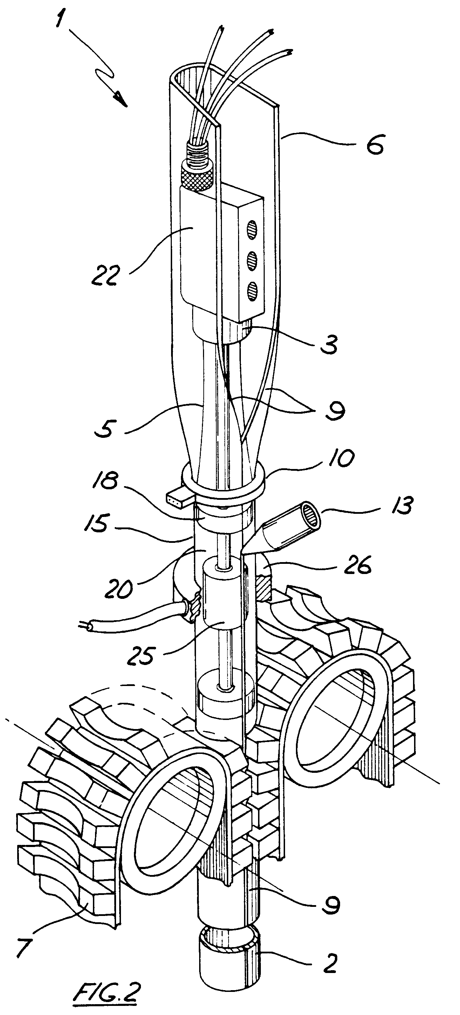

Although the outer tubular body is formed continuously, it will be appreciated from figures 1 and 2 that the longitudinal edges 9 do not join until they reach forming ring 10, downstream of the extrusion die. In this way, the critical extrusion step is always visible immediately adjacent the die for inspection to permit accurate monitoring and continuous quality control.

Once the lining member enters the sealed laminating zone 20, sizing ring 18 acts in conjunction with pressure retaining ring 19 to stabilise the form of the lining. Heat is then applied to the laminating zone to raise the temperature of the lining to a level sufficient to induce thermoplastic softening and preferably to at least the temperature of the preheated outer tubular body. Simultaneously, high pressure air is injected into the interior of the laminating zone through either nozzles 20 of mandrel 16 as shown in Figure 3 or around the peripheral edges of the sizing ring 18 as shown in Figure 4. This pressurized air serves to inflate the softened lining member against radial support pressure provided by the outer tubular body whereby the lining and outer body are bonded together over their corresponding surfaces with a thermoplastic weld to form the composite tubular structure.

In a preferred form of the invention, the heat is conveniently provided by the same hot air used to inflate the lining member within the laminating zone. Heat can also be supplied from an independent internal heating cartridge 25 which may include an electrical resistive element, an induction heater, or other suitable heating means. If required, the laminate bond can be made non-permanent to facilitate subsequent separation of the outer body and lining member for recycling.

The position of rings 18 and 19 can be adjusted to ensure optimum adhesion depending upon the type of material used and other operating conditions. A supplementary outer annular control ring 25 is positioned intermediate inner rings 18 and 19 to enable additional heat to be introduced into the laminating zone for further heating or expansion of the lining if required. Control ring 26 also helps to stabilise the form of the outer tubular body adjacent the laminating zone. Additional adhesion support pressure may also be provided by suitable outer pressure roller assemblies (not shown) acting respectively in conjunction with sizing ring 18 or pressure ring 19 if required.

Finally, the composite body is progressively withdrawn by the main drive assembly incorporating catapillar track 7, drive rollers 8 or a suitable belt (not shown) which may be driven at a speed greater than that at which the lining member is extruded thereby to introduce a longitudinal stretch into the lining enabling wall thickness to be controlled with greater accuracy.

Thus, it will be appreciated that the heating step in conjunction with the thermoplastic properties of the lining member provides a substantially continuous thermoplastic weld effectively and efficiently bonding the lining member to the entire inner surface of the outer body without the need for a separate adhesive application stage or any pre-treatment step. In addition, the liner is biaxially stretched for economy of material and uniformity of strength. This represents a commercially significant improvement over the prior art.

## Claims

1. A substantially continuous method of manufacture of a laminated tubular body (2), said method including the steps of drawing opposite longitudinal edges of a strip of sheet material (6) into close proximity, joining said longitudinal edges to form an outer tubular body (15), extruding a hollow tubular lining member (5) from an extrusion die (3) within said outer tubular body, and thereafter heating the lining member and causing said lining member to expand to intimately contact an inner surface of said outer tubular body to form a substantially continuous lining of the outer tubular body, and
characterised in that said lining member is formed from a thermoplastic material and is heated to a temperature sufficient to form a thermoplastics weld bonding the lining to the inner surface of the outer tubular body on contact.

2. A method according to claim 1 wherein the lining member (5) comprises a thin thermoplastic film.

3. A method according to claim 1 or claim 2 wherein the lining member (5) is extruded from the die (3) at a temperature of between approximately 50°C and 400°C.

4. A method according to claim 3 wherein the lining member (5) is extruded from the die (3) at a temperature of between approximately 100°C and 300°C.

5. A method according to any one of the preceding claims wherein the sheet material (6) forming the outer tubular body (15) is preheated with excess heat from the extrusion die (3).

6. A method according to any one of the preceding claims wherein the corresponding longitudinal edges of the sheet material are joined downstream of the extrusion die (3), thereby to provide an observation window immediately adjacent the die through which the extrusion process is visible for inspection.

7. A method according to any one of the preceding claims wherein the lining member (5) is expanded by means of differential fluid pressure in a laminating zone defined circumferentially by the outer tubular body (15), and longitudinally by an annular sizing ring (18) and a pressure retaining ring (19) disposed downstream of the sizing ring.

8. A method according to claim 7 wherein the lining member (5) is expanded by means of compressed air injected into the laminating zone.

9. A method according to claim 7 or claim 8 wherein additional outwardly directed radial bonding pressure is applied to the lining member (5) by mechanical pressure application means (8) to enhance thermoplastic adhesion between the lining member and the outer tubular body.

10. A method according to claim 9 wherein said mechanical pressure application means includes a pressure roller assembly, a spiral array of ball rollers, or a cylindrical array of staggered radially directed belts.

11. A method according to any one of claims 7 to 10 wherein heat is applied to the lining member by conduction from hot air injected directly into the laminating zone through a centrally disposed mandrel (16) to inflate the lining member.

12. A method according to any one of claims 7 to 11 wherein radiant heat from a separate heat source (25) disposed within or closely adjacent the laminating zone is applied to the lining member to enhance thermoplastic adhesion.

13. A method according to claim 12 wherein said separate heat source is an electric induction heater (25) disposed within or closely adjacent the laminating zone.

14. A method according to any one of claims 5 to 13 wherein the temperature of the thermoplastics lining member within the laminating zone is elevated to at least that of the preheated outer tubular body.

15. A method according to any one of the preceding claims, including the further step of forming at least one aperture in the outer tubular body through which the lining member extends to form a sealed protuberance projecting outwardly beyond an outer surface of the tubular body.

16. A method according to claim 15 including the further step of forming an array of said protuberances to provide a textured gripping surface.

17. A method according to claim 16 wherein the hollow lining member is expanded so as to extend through one of said apertures to form a pouring spout defining a channel in fluid communication with the interior of the laminated tubular body.

18. A method according to any one of the preceding claims wherein the hollow lining member is extruded substantially continuously from the die (3), the respective opposite longitudinal edges of a plurality of said strips are drawn into close proximity, said respective opposite longitudinal edges are joined to form a plurality of outer tubular bodies, said outer tubular bodies are arranged in axially aligned spaced apart relationship around the hollow lining member, and wherein said lining member is heated and expanded to form a substantially continuous lining in intimate contact with the inner surface of each said outer tubular body to form a series of spaced apart laminated tubular bodies joined by intermediate sections of said hollow lining member, said lining member being formed from thermoplastics material and being heated sufficiently to form a thermoplastics weld uniformly bonding the lining member to the outer tubular bodies.

19. An apparatus for the substantially continuous manufacture of a laminated tubular body (2), said apparatus including guide means to draw opposite longitudinal edges of a strip of sheet material into close proximity, joining means (10) to join said longitudinal edges to form an outer tubular body, an extrusion die (3) to extrude a hollow tubular lining member, expansion means to expand the lining member within the outer tubular body so as to form a lining in intimate contact with an inner surface thereof, and characterised by providing heating means to heat said lining member to a temperature sufficient to form a thermoplastic weld bonding the lining to the inner surface of the outer tubular body.

20. An apparatus according to claim 19 further including an annular sizing ring (18) and a pressure retaining ring (19) disposed downstream of the sizing ring to define a laminating zone within the outer tubular body.

21. An apparatus according to claim 20 wherein said expansion means includes a mandrel (16) to inject compressed air into the laminating zone.

22. An apparatus according to claim 20 or claim 21 further including mechanical pressure application means to apply additional outwardly directed radial bonding pressure to the lining member to enhance thermoplastic adhesion between the lining member and the outer tubular body.

23. An apparatus according to claim 22 wherein said mechanical pressure application means includes a pressure roller assembly, a spiral array of ball rollers, or a cylindrical array of staggered radially directed belts.

24. An apparatus according to any one of claims 20 to 23 further including a separate heat source (25) disposed within or closely adjacent the laminating zone to apply radiant heat to the lining member and thereby enhance thermoplastic adhesion.

25. An apparatus according to claim 24 wherein said separate heat source is an electric induction heater disposed within or closely adjacent the laminating zone.

26. A method according to claim 7 or claim 8 wherein a steady flow of the pressurized inflation fluid escapes between the pressure retaining ring (19) and the lining member (5) to simultaneously maintain the dynamic equilibrium in the laminating zone and to act a pneumatic radial bearing to reduce frictional drag between the ring and surrounding lining.

27. A method according to claim 7 or claim 8 wherein at least part of the pressurized inflation fluid is passed between the sizing ring (18) and the lining member to reduce frictional drag between the ring and surrounding lining.

## Patentansprüche

1. Im wesentlichen kontinuierliches Verfahren zum Herstellen eines geschichteten rohrförmigen Körpers (2), mit den Arbeitsschritten des Ziehens sich gegenüberliegender Längsränder eines Streifens eines flächigen Werkstoffs (6) in große Nähe zueinander, des Verbindens der genannten Längsränder zu einem äußeren, rohrförmigen Körper (15), des Extrudierens eines hohlen, rohrförmigen Auskleidungsteils (5) aus einer Extruderdüse (3) in den genannten äußeren, rohrförmigen Körper, und danach des Erwärmens des Auskleidungsteils und des Sichdehnenlassens des Auskleidungsteils in der Weise, daß es sich eng an die Innenfläche des genannten äußeren, rohrförmigen Körpers anlegt, um eine im wesentlichen durchgehende Auskleidung des äußeren, rohrförmigen Körpers zu bilden,
dadurch **gekennzeichnet,** daß
das genannte Auskleidungsteil aus einem thermoplastischen Werkstoff gebildet ist und auf eine Temperatur erwärmt wird, die ausreicht, um bei Berührung eine das Auskleidungsteil mit der Innenfläche des äußeren, rohrförmigen Körpers verbindende thermoplastische Schweißverbindung herzustellen.

2. Verfahren nach Anspruch 1,
bei dem das Auskleidungsteil (5) eine dünne thermoplastische Folie ist.

3. Verfahren nach Anspruch 1 oder 2,
bei dem das Auskleidungsteil (5) aus dem Extruderwerkzeug (3) mit einer Temperatur zwischen etwa 50 °C und 400 °C extrudiert wird.

4. Verfahren nach Anspruch 3,
bei dem das Auskleidungsteil (5) aus dem Extruderwerkzeug (3) mit einer Temperatur zwischen etwa 100 °C und 300 °C extrudiert wird.

5. Verfahren nach einem der vorhergehenden Ansprüche, bei dem der den äußeren, rohrförmigen Körper (15) bildende flächige Werkstoff (6) mit Überschußwärme von der Extruderdüse (3) vorgewärmt wird.

6. Verfahren nach einem der vorhergehenden Ansprüche, bei dem die entsprechenden Längsränder des flächigen Werkstoffs in Arbeitsrichtung nach der Extruderdüse (3) verbunden werden, wodurch ein Beobachtungsfenster in unmittelbarer Nachbarschaft zum Extruderwerkzeug geschaffen wird, durch das der Extrusionsvorgang zur Überprüfung beobachtbar ist.

7. Verfahren nach einem der vorhergehenden Ansprüche, bei dem das Auskleidungsteil (5) mittels eines Differenzfluiddrucks in einer Laminierzone gedehnt wird, die am Umfang durch den äußeren, rohrförmigen Körper (15) und in Längsrichtung durch einen kreisringförmigen Kalibrierring (18) und einen in Arbeitsrichtung nach dem Kalibrierring angeordneten Druckhaltering (19) begrenzt ist.

8. Verfahren nach Anspruch 7,
bei dem das Auskleidungsteil (5) mittels in die Laminierzone eingeblasener Druckluft gedehnt wird.

9. Verfahren nach Anspruch 7 oder Anspruch 8,
bei dem zusätzlicher, nach außen gerichteter, radialer Bindedruck auf das Auskleidungsteil (5) durch eine mechanische Anpreßvorrichtung (8) aufgebracht wird, derart, daß die thermoplastische Haftung zwischen dem Auskleidungsteil und dem äußeren, rohrförmigen Körper verbessert wird.

10. Verfahren nach Anspruch 9,
bei dem die mechanische Anpreßvorrichtung eine Anpreßrollen-Anordnung, eine spiralförmige Anordnung von Kugelwälzkörpern oder eine zylindrische Anordnung gegeneinander versetzter, radial ausgerichteter Riemen umfaßt.

11. Verfahren nach einem der Ansprüche 7 bis 10,
bei dem Wärme dem Auskleidungsteil durch Wärmeleitung von durch einen zentral angeordneten Dorn (16) direkt in die Laminierzone eingeblasener Heißluft zum Aufblasen des Auskleidungsteils zugeführt wird.

12. Verfahren nach einem der Ansprüche 7 bis 11,
bei dem zur Verbesserung der thermoplastischen Haftung dem Auskleidungsteil Strahlungswärme von einer getrennten Wärmequelle (25) zugeführt wird, die in der Laminierzone oder in großer Nähe zu ihr angeordnet ist.

13. Verfahren nach Anspruch 12,
bei dem die genannte getrennte Wärmequelle ein elektrisches Induktionsheizelement (25) ist, das in der Laminierzone oder in großer Nähe zu ihr angeordnet ist.

14. Verfahren nach einem der Ansprüche 5 bis 13,
bei dem die Temperatur des thermoplastischen Auskleidungsteils in der Laminierzone auf wenigstens die Temperatur des vorgewärmten äußeren, rohrförmigen Körpers erhöht wird.

15. Verfahren nach einem der vorhergehenden Ansprüche,
mit dem weiteren Arbeitsschritt des Ausbildens wenigstens einer Öffnung im äußeren, rohrförmigen Körper, durch die sich das Auskleidungsteil erstreckt, derart, daß ein abgedichteter, aus der Außenfläche des rohrförmigen Körpers nach außen herausragender Vorsprung gebildet wird.

16. Verfahren nach Anspruch 15,
mit dem weiteren Arbeitsschritt der Ausbildung einer Reihe der genannten Vorsprünge, derart, daß eine strukturierte Grifffläche entsteht.

17. Verfahren nach Anspruch 16,
bei dem das hohle Auskleidungsteil so gedehnt wird, daß es sich durch eine der genannten Öffnungen erstreckt, derart, daß ein Ausgießer entsteht, der einen mit dem Innern des geschichteten rohrförmigen Körpers in Fluidverbindung stehenden Kanal bildet.

18. Verfahren nach einem der vorhergehenden Ansprüche,
bei dem das hohle Auskleidungsteil im wesentlichen kontinuierlich aus dem Extruderwerkzeug (3) extrudiert wird, die zugehörigen, sich gegenüberliegenden Längsränder einer Vielzahl der genannten Streifen in große Nähe zueinander gezogen werden, die genannten zugehörigen, sich gegenüberliegenden Längsränder zur Bildung einer Vielzahl äußerer, rohrförmiger Körper verbunden werden, die genannten äußeren, rohrförmigen Körper axial fluchtend mit Zwischenabstand um das hohle Auskleidungsteil angeordnet werden, und bei dem das genannte Auskleidungsteil zur Bildung einer im wesentlichen durchgehenden, mit der Innenfläche jedes der genannten äußeren, rohrförmigen Körper in enger Berührung stehenden Auskleidung erwärmt und gedehnt wird, derart, daß eine Reihe beabstandeter geschichteter, rohrförmiger Körper gebildet wird, die durch dazwischenliegende Abschnitte des genannten hohlen Auskleidungsteils verbunden sind, wobei das Auskleidungsteil aus einem thermoplastischen Werkstoff gebildet ist und ausreichend erwärmt wird, um eine das Auskleidungsteil mit den äußeren, rohrförmigen Körpern gleichmäßig verbindende thermoplastische Schweißverbindung zu bilden.

19. Vorrichtung für die im wesentlichen kontinuierliche Herstellung eines geschichteten, rohrförmigen Körpers (2), mit einer Führungseinrichtung, die sich gegenüberliegende Längsränder eines Streifens aus einem flächigen Werkstoff in große Nähe zueinander zieht, einer Verbindungseinrichtung (10), die zur Ausbildung eines äußeren, rohrförmigen Körpers die genannten Längsränder verbindet, einer Extruderdüse (3) zum Extrudieren eines hohlen, rohrförmigen Auskleidungsteils, einer Dehneinrichtung zum Dehnen des Auskleidungsteils innerhalb des äußeren, rohrförmigen Körpers, so daß eine Auskleidung in enger Berührung mit einer Innenfläche desselben entsteht,
**gekennzeichnet** durch
die Bereitstellung einer Heizeinrichtung zum Erwärmen des genannten Auskleidungsteils auf eine Temperatur, die ausreicht, um eine das Auskleidungsteil mit der Innenfläche des äußeren, rohrförmigen Körpers verbindende thermoplastische Schweißverbindung zu bilden.

20. Vorrichtung nach Anspruch 19, ferner mit
einem kreisringförmigen Kalibrierring (18) und einem in Arbeitsrichtung nach dem Kalibrierring angeordneten Druckhaltering (19), die im äußeren, rohrförmigen Körper eine Laminierzone begrenzen.

21. Vorrichtung nach Anspruch 20, bei der
die genannte Dehneinrichtung einen Dorn (16) umfaßt, der Druckluft in die Laminierzone einbläst.

22. Vorrichtung nach Anspruch 20 oder 21, ferner mit
einer mechanischen Anpreßeinrichtung zum Ausüben zusätzlichen, nach außen gerichteten, radialen Bindedrucks auf das Auskleidungsteil, derart, daß die thermoplastische Haftung zwischen dem Auskleidungsteil und dem äußeren, rohrförmigen Körper verbessert wird.

23. Vorrichtung nach Anspruch 22, bei der
die mechanische Anpreßeinrichtung eine Anpreßrollen-Anordnung, eine spiralförmige Anordnung von Kugelwälzkörpern oder eine zylindrische Anordnung von gegenseitig versetzten, radial ausgerichteten Riemen umfaßt.

24. Vorrichtung nach einem der Ansprüche 20 bis 23, ferner mit
einer getrennten Wärmequelle (25), die in der Laminierzone oder in großer Nähe zu ihr angeordnet ist, derart, daß Strahlungswärme dem Auskleidungsteil zugeführt wird und dadurch die thermoplastische Haftung verbessert wird.

25. Vorrichtung nach Anspruch 24, bei der
die genannte getrennte Wärmequelle ein elektrisches Induktionsheizelement ist, das in der Laminierzone oder in großer Nähe zu ihr angeordnet ist.

26. Verfahren nach Anspruch 7 oder 8, bei dem
zwischen dem Druckhaltering (19) und dem Auskleidungsteil (5) ein ständiger Strom unter Druck stehenden Aufblasfluids entweicht, der das dynamische Gleichgewicht in der Laminierzone aufrechterhält und zur gleichen Zeit als pneumatisches Radiallager wirkt, das den Reibungswiderstand zwischen dem Ring und der umgebenden Auskleidung verringert.

27. Verfahren nach Anspruch 7 oder 8, bei dem
wenigstens ein Teil des unter Druck stehenden Aufblasfluids zwischen den Kalibrierring (18) und das Auskleidungsteil geleitet wird, um den Reibungswiderstand zwischen dem Ring und der umgebenden Auskleidung zu verringern.

## Revendications

1. Procédé pratiquement continu de fabrication d'un corps tubulaire stratifié (2), ledit procédé comprenant les phases consistant à attirer les bords longitudinaux opposés d'une bande de matière en feuille (6) pour les rapprocher étroitement, assembler lesdits bords longitudinaux pour former un corps tubulaire extérieur (15), extruder un élément de chemisage tubulaire creux (5), par une filière d'extrusion (3), à l'intérieur dudit corps tubulaire extérieur et, ensuite, chauffer l'élément de chemisage et amener ledit élément de chemisage à se dilater pour entrer en contact intime avec une surface intérieure dudit corps tubulaire extérieur pour former une chemise pratiquement continue du corps tubulaire extérieur, et
caractérisé en ce que ledit élément de chemisage est formé d'une matière thermoplastique et est chauffé à une température suffisante pour former une soudure thermoplastique qui assemble la chemise à la surface intérieure du corps tubulaire extérieur lors de l'entrée en contact.

2. Procédé selon la revendication 1, dans lequel l'élément de chemisage (5) comprend un film thermoplastique mince.

3. Procédé selon la revendication 1 ou la revendication 2, dans lequel l'élément de chemisage (5) est extrudé par la filière (3) à une température d'entre environ 50°C et 400°C.

4. Procédé selon la revendication 3, dans lequel l'élément de chemisage (5) est extrudé par la filière (3) à une température d'entre environ 100°C et 300°C.

5. Procédé selon une quelconque des revendications précédentes, dans lequel la matière en feuille (6) formant le corps tubulaire extérieur (15) est préchauffée avec la chaleur excédentaire de la filière d'extrusion (3).

6. Procédé selon une quelconque des revendications précédentes, dans lequel les bords longitudinaux correspondants de la matière en feuille sont réunis en aval de la filière d'extrusion (3) pour ménager une fenêtre d'observation immédiatement adjacente à la filière, à travers laquelle le processus d'extrusion est visible pour l'inspection.

7. Procédé selon une quelconque des revendications précédentes, dans lequel l'élément de chemisage (5) est dilaté au moyen d'une pression de fluide différentielle dans une zone de stratification définie circonférentiellement par le corps tubulaire extérieur (15) et longitudinalement par une bague de calibrage annulaire (18) et par une bague de retenue de pression (19) disposée en aval de la bague de calibrage.

8. Procédé selon la revendication 7, dans lequel l'élément de chemisage (5) est dilaté au moyen d'air comprimé injecté dans la zone de stratification.

9. Procédé selon la revendication 7 ou la revendication 8, dans lequel une pression additionnelle d'assemblage radial dirigée vers l'extérieur est appliquée à l'élément de chemisage (5) par des moyens mécaniques d'application de pression (8) pour renforcer le collage thermoplastique entre l'élément de chemisage et le corps tubulaire extérieur.

10. Procédé selon la revendication 9, dans lequel les moyens mécaniques d'application de pression comprennent un ensemble de molettes de pression, un train hélicoïdal de rouleaux à billes ou un train cylindrique de courroies décalées dirigées radialement.

11. Procédé selon une quelconque des revendications 7 à 10, dans lequel de la chaleur est apportée à l'élément de chemisage par conduction, fournie par de l'air chaud injecté directement dans la zone de stratification à travers un mandrin (16) positionné en position centrale pour gonfler l'élément de chemisage.

12. Procédé selon une quelconque des revendications 7 à 11, dans lequel de la chaleur radiante issue d'une source de chaleur séparée (25) disposée à l'intérieur de la zone de stratification ou étroitement adjacente à cette zone est appliquée à l'élément de chemisage pour renforcer le collage thermoplastique.

13. Procédé selon la revendication 12, dans lequel ladite source de chaleur séparée est un élément chauffant électrique à induction (25) disposé à l'intérieur de la zone de stratification ou étroitement adjacent à cette zone.

14. Procédé selon une quelconque des revendications 5 à 13, dans lequel la température de l'élément de chemisage thermoplastique à l'intérieur de la zone de stratification est élevée au moins au niveau de celle du corps tubulaire extérieur préchauffé.

15. Procédé selon une quelconque des revendications précédentes, comprenant la phase additionnelle consistant à former dans le corps tubulaire extérieur au moins une ouverture à travers laquelle l'élément de chemisage passe pour former une protubérance étanche qui se projette à l'extérieur au-delà de la surface extérieure du corps tubulaire.

16. Procédé selon la revendication 15, comprenant la phase additionnelle consistant à former une rangée desdites protubérances pour créer une surface de prise texturée.

17. Procédé selon la revendication 16, dans lequel l'élément de chemisage creux est dilaté de manière qu'il passe à travers une desdites ouvertures pour former un bec verseur définissant un canal en communication fluidique avec l'intérieur du corps tubulaire stratifié.

18. Procédé selon une quelconque des revendications précédentes, dans lequel l'élément de chemisage creux est extrudé de façon pratiquement continue par la filière (3), les bords longitudinaux opposés respectifs d'une pluralité desdites bandes sont attirés de façon à être étroitement rapprochés, lesdits bords longitudinaux opposés respectifs sont réunis pour former une pluralité de corps tubulaires extérieurs, lesdits corps tubulaires extérieurs sont disposés dans des positions alignées axialement, espacées, autour de l'élément de chemisage creux et dans lequel ledit élément de chemisage est chauffé et dilaté pour former une chemise pratiquement continue en contact intime avec la surface intérieure de chacun desdits corps tubulaires extérieurs pour former une série de corps tubulaires stratifiés espacés réunis par des sections intermédiaires dudit élément de chemisage creux, ledit élément de chemisage étant formé d'une matière thermoplastique et étant chauffé suffisamment pour former une soudure thermoplastique qui assemble uniformément l'élément de chemisage aux corps tubulaires extérieurs.

19. Appareil pour la fabrication pratiquement continue d'un corps tubulaire stratifié (2), ledit appareil comprenant des moyens de guidage pour attirer des bords longitudinaux opposés d'une bande de matière en feuille pour les rapprocher étroitement, des moyens d'assemblage (10) destinés à assembler lesdits bords longitudinaux pour former un corps tubulaire extérieur, une filière d'extrusion (3) servant à extruder un élément de chemisage tubulaire creux, des moyens de dilatation servant à dilater l'élément de chemisage à l'intérieur du corps tubulaire extérieur de façon à former une chemise en contact intime avec sa surface intérieure, et caractérisé en ce qu'il comprend des moyens de chauffage pour chauffer ledit élément de chemisage à une température suffisante pour former une soudure thermoplastique qui assemble la chemise à la surface intérieure du corps tubulaire extérieur.

20. Appareil selon la revendication 19, comprenant en outre une bague de calibrage annulaire (18) et une bague de retenue de pression (19) disposée en aval de la bague de calibrage pour définir une zone de stratification à l'intérieur du corps tubulaire extérieur.

21. Appareil selon la revendication 20, dans lequel lesdits moyens de dilatation comprennent un mandrin (16) servant à injecter de l'air comprimé dans la zone de stratification.

22. Appareil selon la revendication 20 ou la revendication 21, comprenant en outre des moyens mécaniques d'application de pression servant à appliquer une pression additionnelle d'assemblage radial dirigée vers l'extérieur à l'élément de chemisage pour renforcer le collage thermoplastique entre l'élément de chemisage et le corps tubulaire extérieur.

23. Appareil selon la revendication 22, dans lequel les moyens mécaniques d'application de pression comprennent un ensemble de molettes de pression, un train hélicoïdal de rouleaux à billes ou un train cylindrique de courroies décalées dirigées radialement.

24. Appareil selon une quelconque des revendications 20 à 23, comprenant en outre une source de chaleur séparée (25), disposée à l'intérieur de la zone de stratification ou dans une position étroitement adjacente à cette zone pour appliquer de la chaleur radiante à l'élément de chemisage et pour renforcer ainsi le collage thermoplastique.

25. Appareil selon la revendication 24, dans lequel ladite source de chaleur séparée est un élément chauffant électrique à induction disposé à l'intérieur de la zone de stratification ou dans une position étroitement adjacente à cette zone.

26. Procédé selon la revendication 7 ou la revendication 8, dans lequel un flux constant de fluide de gonflage sous pression s'échappe entre la bague de retenue de la pression (19) et l'élément de chemisage (5) pour maintenir l'équilibre dynamique dans la zone de stratification et, en même temps, se comporter comme un palier pneumatique radial pour réduire la résistance de frottement entre la bague et la chemise qui l'entoure.

27. Procédé selon la revendication 7 ou la revendication 8, dans lequel au moins une partie du fluide de gonflage mis sous pression passe entre la bague de calibrage (18) et l'élément de chemisage pour réduire la résistance de frottement entre la bague et la chemise qui l'entoure.
